# EUROPEAN PATENT SPECIFICATION

(11) **EP 4 217 633 B1**
(45) Date of publication and mention of the grant of the patent: **06.08.2025**
(21) Application number: 21805386.6
(22) Date of filing: 21.10.2021
(51) Int. Cl.: F16K 37/00, G01M 13/00, G01M 13/003, G01N 27/04

(54) **VALVE SYSTEM AND METHOD**
VENTILSYSTEM UND VERFAHREN
SYSTÈME ET PROCÉDÉ DE VANNE

(30) Priority: 28.10.2020 GB 202017095
(43) Date of publication of application: 02.08.2023
(73) Proprietor: Siemens Energy AS, 0596 Oslo (NO)
(72) Inventor: KRISTIANSEN, Karstein Berge, 7051 Trondheim (NO)
(74) Representative: HKW Intellectual Property PartG mbB
(86) International application number: PCT/EP2021/079216
(87) International publication number: WO 2022/090052

(56) References cited:
- WO-A1-2017/194222
- JP-A- 2020 014 775
- RU-C1- 2 680 659
- US-A1- 2018 347 313

## Description

This invention relates to a valve for subsea, or underwater, use, or use in other remote locations and associated valve monitoring system and method.

For fluid flow control in subsea, or underwater, environments, conventionally, hydraulic valves have been used to control fluid flow e.g., from a subsea well to topside. In order to put the valves into a failsafe mode, when power to the valve is cut, the hydraulic fluid is bled from the valve to prevent inadvertent operation of the valve and the valve reverts to a safe, generally closed, state. The hydraulic valves are designed to only open when power and hydraulic fluid can hold the valve open. In the event of failure of any part of the system, the valve closes and remains closed, preventing fluid flow. However, although these valves can be made failsafe and hence are widely accepted in the industry, the associated systems for hydraulic valves take up a lot of space and add to costs, so there is interest in using alternative types of valves.

US 2018/347313 A1 describes a fail-safe surface controlled electric subsurface safety valve for use in a well, the valve having a master control system and dual redundancy.

RU 2 680 659 C1 describes electric methods of non-destructive testing of coil springs.

JP 2020 014775 A describes monitoring of fire fighting valve devices for abnormalities.

In accordance with a first aspect of the present invention, a method of determining reliability of an element of an actuator of a valve closure member comprises applying a signal from a signal source comprising one of a current source or a voltage source, through the element of the actuator, the element being adapted to hold a subsea valve closure member in a position whereby fluid flow through the valve is enabled; measuring time varying values of at least one of amplitude or frequency of the signal flowing through the element; comparing the measured values with predetermined values; and providing an indication, if the measured values are outside an acceptable range, or threshold; wherein the element comprises a conductive metal spring; and,
wherein the method comprises sweeping a first current with time varying amplitude and a second current with time varying frequency, in succession.

The threshold may be a minimum measured value below which the resistance in the element is assumed to have increased to an extent indicating structural change in the material of the element.

The thresholds may be boundaries of a range of measured values deemed to indicate normal operation of the material of the element.

One or more processors may carry out condition monitoring of the element of the actuator, whereby measured values over a period of time are used to determine a maintenance or repair schedule.

The method may further comprise determining whether or not the valve is open before making the comparison of the measured values and the predetermined values.

The method may further comprise determining the extent to which the valve is open before making the comparison of the measured values and the predetermined values.

In accordance with a second aspect of the present invention, a valve monitoring system comprises an actuator adapted to hold a valve closure member in a position whereby fluid flow through the valve is enabled; a monitoring circuit comprising a signal source, the signal source comprising one of a current source or a voltage source, a signal sensor and a processor, wherein the monitoring circuit is adapted to apply to an element of the actuator, a signal from the signal source which varies in at least one of amplitude and frequency,; wherein the monitoring circuit is connected to either end of the element of the actuator and adapted to monitor signals passing through the element of the actuator; wherein data from the signal sensor is processed in the processor to provide an indication, if the monitored signal is outside a predetermined range, or passes a threshold; wherein the element of the actuator comprises a metal spring; and, wherein the system is adapted to apply a method comprising sweeping a first current with time varying amplitude and a second current with time varying frequency, in succession.

The valve monitoring system operates without any physical force, movement, vibration, or excitation being applied to the valve, which could cause damage, but simply passes a current through the valve actuator element to determine whether any change in structure of the element has occurred.

The metal may comprise stainless steel or other seawater resistant steel.

The signal applied by the source may be a current.

The current applied by the source may be shifted in at least one of amplitude or frequency in the time domain.

Changes detected in measurements of a time varying amplitude of a current or a time varying frequency of a current, allow stress in the metal to be determined.

The valve may comprise a subsea, or underwater valve, or a valve adapted for remote land-based installations.

The present invention provides a monitoring system for a valve based on continuous monitoring of fatigue by measuring currents through the spring, varying in amplitude and frequency over time. This is particularly useful for subsea or remote land-based locations where it is difficult to access the valves for inspection and maintenance.

The threshold may comprise a predetermined minimum value.

An increase in resistance and hence reduction in current sensed may indicate a reduction in thickness, or increase in voids, in the body of the tensioner, which may be indicative of fatigue in the material of the tensioner body.

In accordance with a third aspect of the present invention, a valve comprises a valve body, a closure member and a valve monitoring system according to the first aspect.

An example of a valve monitoring system and associated method in accordance with the present invention will now be described with reference to the accompanying drawings in which:
Figure 1 illustrates a conventional hydraulic valve;
Figures 2a and 2b illustrate the operation of the hydraulic valve of Fig. 1, in more detail;
Figures 3a and 3b illustrate one aspect of the valve system according to the present invention in more detail;
Figure 4 is a block diagram of a valve monitoring system according to the present invention;
Figures 5a and 5b illustrate another aspect of the valve system according to the present invention in more detail;
Figure 6 is a flow diagram illustrating a method of operating the monitored valve.

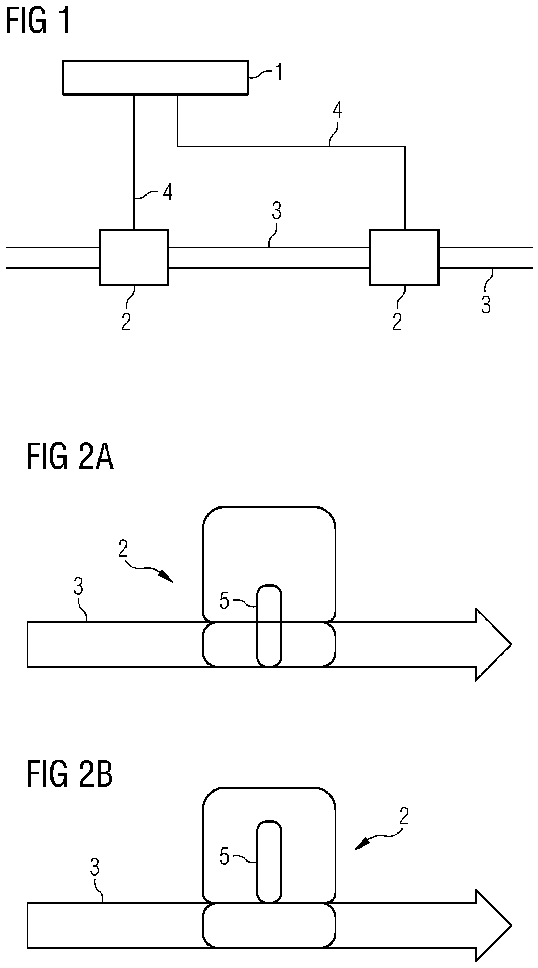

In process industries, valves are used to regulate flow and typically have an operating mechanism which controls opening and closing of the valve, such as hydraulic pressure from a hydraulic fluid which forces the valve open, illustrated schematically in Fig. 1. There may be one or more valves 2 in a flow line 3, which are operated by hydraulic fluid in control lines 4 provided from a source 1 of hydraulic fluid, for example by a pump. The hydraulic fluid from the source provides the power needed to operate an actuator of a valve 2 used in the control of a flow in a flow line 3 and hold the valve open. The actuator needs to have a defined safe position which the actuator should enter when the power is removed for whatever reason. For hydraulic based systems this is done by bleeding out the hydraulic power when the electrical power is shut down, thus returning the valve to a fail-safe, closed, position. This can be seen in more detail in Figs.2a and 2b. In Fig.2a, the fluid flowing in the flow line 3 is stopped when a piston 5 of a valve 2 blocks the flow line, i.e. the valve is closed. This is the state when there is no hydraulic pressure applied to the piston. In Fig.2b, hydraulic pressure is applied to the piston 5 and moves it away from the flow line, so that the valve is open and fluid flow along the flow line and past the valve is permitted.

As discussed above, this is a reliable system, but subsea located valves operated by hydraulic power are dependent on costly infrastructure, such as umbilicals, which connect the subsea located valves to a topside located hydraulic reservoir which acts as the power source. Distributing power to operate valves by the means of hydraulic power also imposes limitations on the distance between the valve and the hydraulic power reservoir.

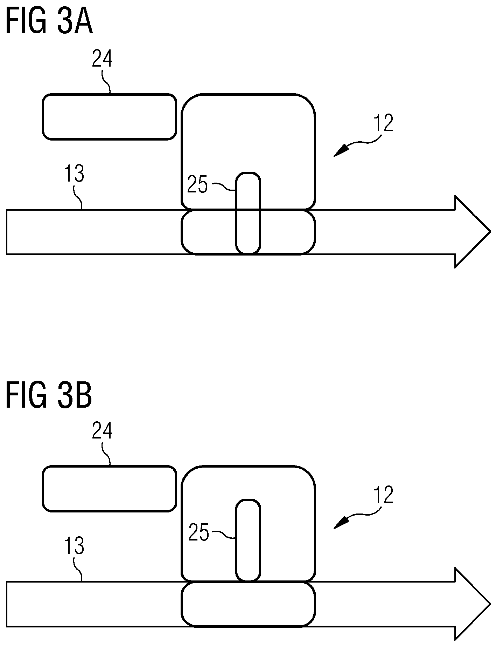

An alternative valve type is an electrically operated valve, as illustrated in Figs.3a and 3b.in which electric power is used to operate the valve 12. The supply voltage may be provided from energy storage, or from a mains supply. As with the hydraulic system, the electrically operated valve closes the valve to prevent fluid flow in the flow line 13 by moving the piston 25 into a position in the flow line which blocks flow, as shown in Fig.3a, or opens the valve and allows flow in the flow line 13 by moving the piston out of the flow line. However, these electrically operated valves are dependent on electrical energy stored in a battery for failsafe operation when the main supply voltage is removed, whether in a controlled or an abrupt manner, for example due to a failure of the energy supply. This is because electromechanical electrically operated valves, are adjustable when power is applied, but if power is lost, the valve stops at the position at which it stood when the power was last available, unlike the hydraulically operated valve which simply returns to the closed position when the hydraulic force is removed.

Thus, the electrically operated valve is more complicated in the case of a failure than a hydraulic valve, since the electro-mechanical valve requires electrical power to operate, and when the power source is shut down it requires a controlled energy storage large enough to run the actuator until it has moved the valve into its fail- safe position. This emergency power source is usually based on energy stored in batteries. The provision of a battery backup 24 for the main power supply, means that if an electromechanical valve fails, the battery back-up kicks in to move the valve to a safe state. This form of back-up introduces weight and control and monitoring requirements to the design because the energy storage or batteries must be particularly reliable to meet the necessary safety standards in the event of a power failure. Furthermore, even the use of a battery backup raises concerns because there is still the risk that the battery 24 has insufficient power available at the time of failure. As a result, operators of subsea and offshore equipment have been reluctant to change from hydraulic valves to electromechanical valves for fluid flow control because the valves do not naturally revert to a fail-safe mode.

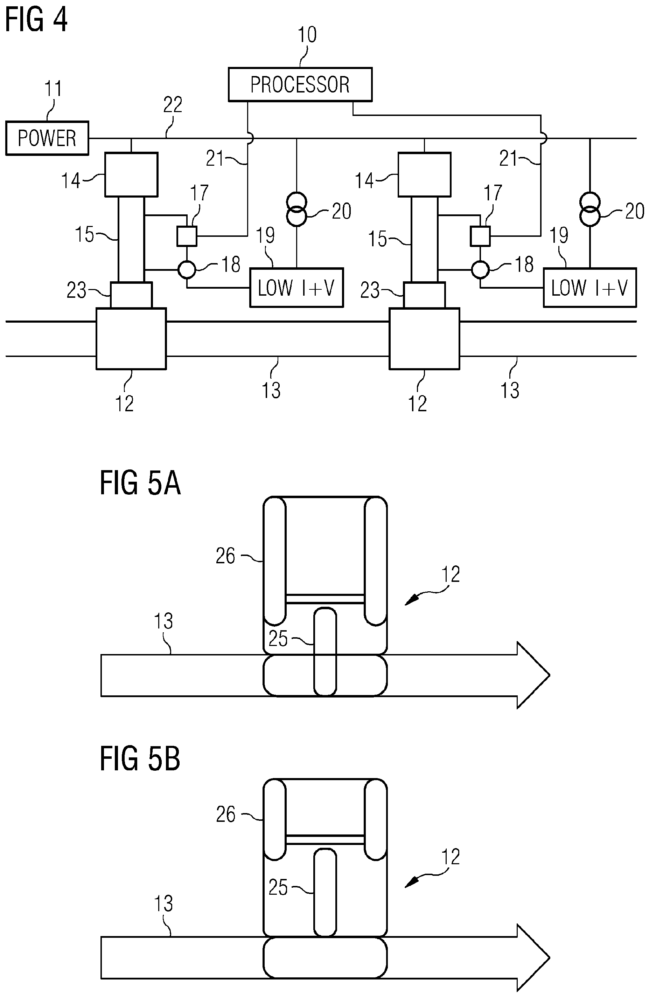

An option to address this is illustrated in Fig.4. A flow line 13 may have one or more valves 12, which are generally open in normal use, but need to be able to be closed reliably in certain circumstances. This may be for example, if there is a power failure in the system. In normal operation, assumed to be where the valves 12 are open, an element of an actuator 14, in this example, a spring 15 holds a valve closure member, for example piston 25 as illustrated in more detail in Figs. 5a and 5b, in a position that allow fluid flow through the valve in the flowline 13. This may be achieved by compressing the spring 15 using the actuator 14, with power from a power source 11, the compressed spring pulling the closure member away from the flow path through the valve. The power is typically electric, for example from a system power supply. If the power fails, the spring 15 is no longer under compression and expands to apply a spring force to close the valve 12, for example by moving a valve actuator 23 and piston 25, as can be seen in Fig.5a, which shows the spring extended and the piston in the closed position, preventing flow in the flowline 13 from passing the valve. This arrangement means that a loss of power leaves the valve 13 in a safe position, without the need for a back-up battery or other auxiliary power source. When the external power source 11 to the tensioner 14 ceases, the tension on the spring 15, 16 is released and the spring compresses 15 and pushes the valve 13 into its fail-safe position.

Electric power is required to open the valve and arm the spring, holding the spring in compression and the piston away from the valve, so the valve is open. Energy stored in the spring from that compression is used to close the valve when the electric power is no longer applied. Although the arrangement may be such that the spring 15 acts directly on a valve closure member 25 to close the valve 12, in most cases, an actuator 23 is still required to reopen the valve when the power returns and the actuator 14 pulls the spring 15 away from the flowline and valve closure member.

With hydraulically operated valves, the power which forces the piston open is removed when the force from the hydraulic fluid is removed. With a valve operated by electric power, the gearbox used is kept in the last position it had reached when the electrical power was removed. A hydraulic valve depends on a continuous hydraulic pressure (power) to be kept in the correct position, while an electric valve only depends on power during change of state/position. Thus, if control or contact to an electrical valve is lost, the valve must be designed to go to a predefined safe (closed) situation. This may be done, for example, by using energy stored in batteries to operate the same motor and gearbox as used during normal operation, or by using the force of a spring which activates as soon as external power/communication to the actuator is lost, which external power was holding the spring back, preventing the spring from closing the valve.

However, the state of the spring in a spring enabled safety valve is not always known immediately before the spring is required to operate in case of a power failure, so a further improvement is provided by the present invention. If the spring itself has failed or broken without giving any indication, then it may not apply sufficient spring force when the power fails, to move the valve into its closed position, which is generally, the desired, safe, option. Although a strain gauge sensor could be fitted onto the spring, these are difficult to attach and may fall off in use. As even with a spring in addition to the powered actuator, there may still be concerns about reliability of the spring, these concerns need to be addressed. The invention provides a further benefit in that a technique for determining that the spring is functioning as expected is provided, which does not rely on power being available at the time of a failure that needs the spring to operate effectively.

As illustrated in Fig.4, the present invention addresses these various concerns by providing a method of monitoring with a fatigue measurement system for the spring 15 to determine fatigue in the spring using an electric current. As the spring is a conductive metal, then any break in the spring results in the conduction path also being broken and this can be detected. In addition, the electrical behaviour changes from the extended, or static, position, to that experienced when the spring is under compression. From this, small changes in stress and fatigue in the metal may be measured and the status of the spring determined, both in terms of its expansion/compression and its integrity and thus reliability.

Measurements may be made by applying a signal from a signal source, for example, a current from a current source, or a voltage from a voltage source, having a known value of current or voltage. Either voltage or current feedback may be measured from the device under test, whichever source is used. Alternatively, both voltage and current feedback from the device under test may be measured. The current or voltage from the respective source may vary amplitude with time, or may vary frequency with time, or both amplitude and frequency of the current or voltage may be time varying, for example, measuring with a time varying frequency and a time varying current or voltage, in succession, or together. According to the invention, the method comprises sweeping a first current with time varying amplitude and a second current with time varying frequency, in succession. This has the advantage that no excitation or vibration is needed to determine the status of the spring meaning that carrying out the test of the spring material status without relying on mechanical movement, avoids interfering with normal operation of the valve and does not risk further damage, if the element is already in a poor state.

Advantageously, a mixture of time varying frequency and time varying amplitude measurements are used. In the example shown, which is for a current source, but applies equally for a voltage source, a current source 18 supplies a known value of a relatively low current, which flows through the spring 15. The current after flowing through the spring is measured by a sensor 17 and the measured values fed to a processor 10. More details of the measurements are given below. Processor 10 may be a central processor as illustrated in Fig.4, or a distributed control processor, with Individual processors (not shown) for each spring 15, 16 and supply 18 and sensor 17, may be provided. The supply may be AC or DC and may be converted 19 from a higher voltage primary power supply 11, which may also supply the tensioner with power in normal operation. For an AC system, a transformer transforms down to an appropriate voltage level for the monitoring signal source

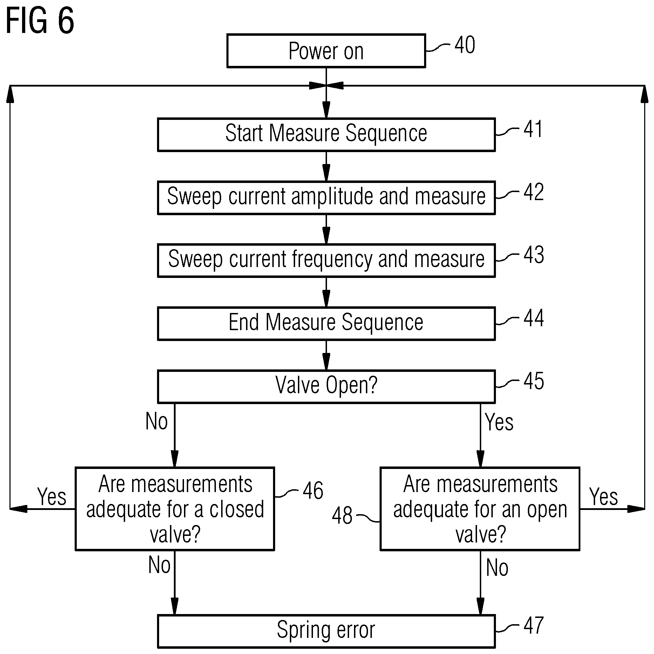

The method by which this monitoring and fatigue measurement is carried out is illustrated in more detail in the flow diagram of Fig.6. The spring is installed and moved to its normal operating position, holding the valve open by suitable operation of the valve actuator. Power is switched on and a current is then applied 40 by the current source 18 to the spring 15. A measure sequence is started 41 and a sweep of current amplitude is measured 42 by a current sensor 17. This is typically a continuous process, rather than an intermittent one, to ensure that any change that might indicate a fault is detected as soon as possible. The next step is to sweep 43 the current frequency and measure this at the current sensor 17. The measure sequence is then ended 44 and the data fed to the processor 10. At no point does the fatigue measurement interfere with normal operation, which might be the case with active excitation of an element to determine a change in amplitude or frequency of the signal used, but changes can be detected that enable an operator to determine whether or not the fail-safe status of the spring has been compromised.

A determination 45 of whether or not the valve is open at the time of the measurements is made. If the valve is open, a comparison 48 of the measured amplitude and frequency measurements is made with known values for an open valve. If the measured values are not deemed to be adequate for an open valve, then a spring error indication is provided 47. If the measured values are deemed to be adequate for an open valve, then a new measure sequence is started by returning to step 41. If step 45 determines that the valve 12 is not open at the time of the measurements being made, then a comparison 46 of the measured amplitude and frequency measurements is made with known values for a closed valve. If the measured values are not deemed to be adequate for a closed valve, then a spring error indication is provided 47. If the measured values are deemed to be adequate for a closed valve, then a new measure sequence is started by returning to step 41. After a spring error indication occurs 47, which may mean that the spring is suffering from fatigue, steps may be taken to avoid the spring failing at the same time as there is a power failure.

In the examples shown, the values are compared for an open valve, or a closed valve, but in practice, there may be settings for different states in between, i.e. partially open (nearer closed than open), partially closed (nearer open than closed), or at some predetermined intermediate state, e.g. halfway and the comparisons made in the processing step may be adapted accordingly.

Electrical conductivity or resistivity distribution in a metal conductor may be used as the basis for the comparisons of steps 46 and 48, as these are factors which change in the case of damage to the metal structure. Thus, reliability of a mechanical spring can be determined and from that, assumptions can be made as to the likelihood of the mechanical spring being able to move an electro-mechanical actuator into a fail-safe position, or hold the actuator there. As the reliability is being measured up to the point at which the spring has to be relied upon to force the valve into its fail-safe position, loss of electric power is not an issue. The spring forces the valve into a safe shutdown position when the power fails without needing to rely on stored electrical energy in a battery or other energy storage to operate the electro-mechanical actuator at a critical time. With the additional reassurance of reliable fatigue measurements on a spring, then a spring may be used as a fail-safe mechanism in electro-mechanical actuators, instead of batteries.

In a further embodiment a multi-frequency electrical current runs through the spring continuously and feeds into diagnostic software, which evaluates the measured values from the metal in the spring over time. Over a prolonged period, such as weeks or months, this allows condition monitoring of the tensioner to be carried out and the long-term values may, for example, be used to determine typical lifetimes for maintenance or replacement schedules.

A reliable spring provides an electrically operated valve to have a well defined safe state that is not dependent upon energy storage and has the advantage that it gives a substantially instant fail safe position in the event of a power failure, whilst a battery operated system might need to maintain power for a significant period to close the valve, if the valve was wide open when the primary power failed. Using energy stored in batteries for failsafe closing of values puts a lot of monitoring and safety aspects into the charging, storage and use of the batteries. Monitoring fatigue in the spring introduces some complexity into the design, but far less than designing a fail-safe enabled battery setup to operate one or several actuators. No external strain gauge is required by taking current measurements in the metal of the spring itself, typically steel.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention is defined by the appended claims.

It should be noted that the term "comprising" does not exclude other elements or steps and "a" or "an" does not exclude a plurality. Elements described in association with different embodiments may be combined. It should also be noted that reference signs in the claims should not be construed as limiting the scope of the claims. Although the invention is illustrated and described in detail by the preferred embodiments, the invention is not limited by the examples disclosed, and other variations can be derived therefrom by a person skilled in the art without departing from the scope of the invention as defined by the appended claims.

## Claims

1. A method of determining reliability of an element (15) of an actuator (14) of a valve closure member (25), the method comprising applying (40) a signal from a signal source (18) comprising one of a current source (18) or a voltage source, through the element (15) of the actuator (14), the element (15) being adapted to hold a subsea valve closure member (25) in a position whereby fluid flow through the valve (12) is enabled; measuring (41,42) time varying values of at least one of amplitude or frequency of the signal flowing through the element (15); comparing (48) the measured values with predetermined values; and providing an indication, if the measured values are outside an acceptable range, or threshold; wherein the element (15) comprises a conductive metal spring (15); and, wherein the method comprises sweeping (43) a first current with time varying amplitude and a second current with time varying frequency, in succession.

2. A method according to claim 1, wherein the threshold is a minimum measured value below which the resistance in the element (15) is assumed to have increased to an extent indicating structural change in the material of the element (15).

3. A method according to claim 1 or claim 2, wherein thresholds comprising boundaries of a range of measured values deemed to indicate normal operation of the material of the element (15) are set.

4. A method according to any of claims 1 to 3, wherein one or more processors (10) carry out condition monitoring of the element (15) of the actuator (14), whereby measured values over a period of time are used to determine a maintenance or repair schedule.

5. A method according to any of claims 1 to 4, wherein the method further comprises determining (45) whether or not the valve (12) is open before making the comparison (48) of the measured values and the predetermined values.

6. A method according to any of claims 1 to 4, wherein the method further comprises determining the extent to which the valve (12) is open before making the comparison (48) of the measured values and the predetermined values.

7. A valve monitoring system, the system comprising an actuator (14) adapted to hold a valve closure member (25) in a position whereby fluid flow through the valve (12) is enabled; a monitoring circuit comprising a signal source (18), the signal source (18) comprising one of a current source (18) or a voltage source, a signal sensor (17) and a processor (10), wherein the monitoring circuit is adapted to apply to an element (15) of the actuator (14), a signal from the signal source (18) which varies in at least one of amplitude and frequency; wherein the monitoring circuit is connected to either end of the element (15) of the actuator and adapted to monitor signals passing through the element (15) of the actuator (14); wherein data from the signal sensor (17) is processed in the processor (10) to provide an indication, if the monitored signal is outside a predetermined range, or passes a threshold; **characterised in that** the element (15) of the actuator (14) comprises a metal spring (15); and, wherein the system is adapted to apply a method comprising sweeping (43) a first current with time varying amplitude and a second current with time varying frequency, in succession, in order to determine reliability of the metal spring (15).

8. A system according to claim 7, wherein the metal comprises stainless steel or other seawater resistant steel.

9. A system according to claim 7 or claim 8, wherein current applied by the source (18) is shifted in at least one of amplitude or frequency in the time domain.

10. A system according to any of claims 7 to 9, wherein the valve (12) comprises a subsea, or underwater valve, or a valve adapted for remote land-based installations.

11. A system according to any of claims 7 to 10, wherein the threshold comprises a predetermined minimum value.

12. A valve comprising a valve body, a closure member (25) and a valve monitoring system according to any of claims 7 to 11.

## Patentansprüche

1. Verfahren zum Bestimmen der Zuverlässigkeit eines Elements (15) eines Aktuators (14) eines Ventilverschlussglieds (25), wobei das Verfahren Folgendes umfasst: Anlegen (40) eines Signals von einer Signalquelle (18), die eine Stromquelle (18) oder eine Spannungsquelle umfasst, über das Element (15) des Aktuators (14), wobei das Element (15) dazu ausgelegt ist, ein Unterwasserventilverschlussglied (25) in einer Position zu halten, in der ein Fluidstrom durch das Ventil (12) ermöglicht wird; Messen (41, 42) von zeitlich variierenden Werten der Amplitude und/oder Frequenz des Signals, das durch das Element (15) fließt; Vergleichen (48) der gemessenen Werte mit vorbestimmten Werten; und Bereitstellen einer Angabe, wenn die gemessenen Werte außerhalb eines akzeptablen Bereichs oder einer akzeptablen Schwelle liegen; wobei das Element (15) eine leitfähige Metallfeder (15) umfasst; und wobei das Verfahren nacheinander erfolgendes Sweeping (43) eines ersten Stroms mit zeitlich variierender Amplitude und eines zweiten Stroms mit zeitlich variierender Frequenz umfasst.

2. Verfahren nach Anspruch 1, wobei die Schwelle ein minimaler Messwert ist, unter dem angenommen wird, dass der Widerstand in dem Element (15) in einem Ausmaß zugenommen hat, das eine strukturelle Änderung in dem Material des Elements (15) angibt.

3. Verfahren nach Anspruch 1 oder Anspruch 2, wobei Schwellen, die Grenzen eines Bereichs von Messwerten umfassen, die als eine normale Funktionsweise des Materials des Elements (15) angebend angesehen werden, eingestellt werden.

4. Verfahren nach einem der Ansprüche 1 bis 3, wobei ein oder mehrere Prozessoren (10) eine Zustandsüberwachung des Elements (15) des Aktuators (14) durchführen, wobei Messwerte über einen Zeitraum verwendet werden, um einen Wartungs- oder Reparaturzeitplan zu bestimmen.

5. Verfahren nach einem der Ansprüche 1 bis 4, wobei das Verfahren ferner umfasst, zu bestimmen (45), ob das Ventil (12) offen ist oder nicht, bevor der Vergleich (48) der Messwerte und der vorbestimmten Werte durchgeführt wird.

6. Verfahren nach einem der Ansprüche 1 bis 4, wobei das Verfahren Bestimmen des Ausmaßes der Öffnung des Ventils (12) umfasst, bevor der Vergleich (48) der Messwerte und der vorbestimmten Werte durchgeführt wird.

7. Ventilüberwachungssystem, wobei das System einen Aktuator (14) umfasst, der dazu ausgelegt ist, ein Ventilverschlussglied (25) in einer Position zu halten, in der ein Fluidstrom durch das Ventil (12) ermöglicht wird; eine Überwachungsschaltung, die eine Signalquelle (18), wobei die Signalquelle (18) eine Stromquelle (18) oder eine Spannungsquelle umfasst, einen Signalsensor (17) und einen Prozessor (10) umfasst, wobei die Überwachungsschaltung dazu ausgelegt ist, an ein Element (15) des Aktuators (14) ein Signal von der Signalquelle (18) anzulegen, dessen Amplitude und/oder Frequenz variiert; wobei die Überwachungsschaltung mit jedem Ende des Elements (15) des Aktuators verbunden ist und dazu ausgelegt ist, Signale zu überwachen, die durch das Element (15) des Aktuators (14) geleitet werden; wobei Daten von dem Signalsensor (17) in dem Prozessor (10) verarbeitet werden, um eine Angabe bereitzustellen, wenn das überwachte Signal außerhalb eines vorbestimmten Bereichs liegt oder eine Schwelle durchquert; **dadurch gekennzeichnet, dass** das Element (15) des Aktuators (14) eine Metallfeder (15) umfasst; und wobei das System dazu ausgelegt ist, ein Verfahren anzuwenden, das nacheinander erfolgendes Sweeping (43) eines ersten Stroms mit zeitlich variierender Amplitude und eines zweiten Stroms mit zeitlich variierender Frequenz umfasst, um die Zuverlässigkeit der Metallfeder (15) zu bestimmen.

8. System nach Anspruch 7, wobei das Metall rostfreien Stahl oder anderen seewasserbeständigen Stahl umfasst.

9. System nach Anspruch 7 oder Anspruch 8, wobei die Amplitude und/oder die Frequenz des durch die Quelle (18) angelegten Stroms im Zeitbereich verschoben ist.

10. System nach einem der Ansprüche 7 bis 9, wobei das Ventil (12) ein Untersee- oder Unterwasserventil oder ein für landbasierte Remote-Installationen ausgelegtes Ventil umfasst.

11. System nach einem der Ansprüche 7 bis 10, wobei die Schwelle einen vorbestimmten Mindestwert umfasst.

12. Ventil, umfassend einen Ventilkörper, ein Verschlussglied (25) und ein Ventilüberwachungssystem nach einem der Ansprüche 7 bis 11.

## Revendications

1. Procédé pour déterminer la fiabilité d'un élément (15) d'un actionneur (14) d'un organe de fermeture de vanne (25), le procédé comprenant les étapes suivantes : appliquer (40) un signal provenant d'une source de signal (18) comprenant une source de courant (18) ou une source de tension, à travers l'élément (15) de l'actionneur (14), l'élément (15) étant adapté pour maintenir un élément de fermeture de vanne sous-marine (25) dans une position dans laquelle l'écoulement de fluide à travers la vanne (12) est possible ; mesurer (41, 42) des valeurs variables dans le temps d'au moins l'une parmi l'amplitude ou la fréquence du signal circulant à travers l'élément (15) ; comparer (48) les valeurs mesurées à des valeurs prédéterminées ; et fournir une indication si les valeurs mesurées se trouvent en dehors d'une plage acceptable ou d'un seuil ; où l'élément (15) comprend un ressort métallique conducteur (15) ; et où le procédé comprend de balayer (43) de manière successive un premier courant dont l'amplitude varie dans le temps et un deuxième courant dont la fréquence varie dans le temps.

2. Procédé selon la revendication 1, dans lequel le seuil est une valeur mesurée minimale en dessous de laquelle la résistance dans l'élément (15) est supposée avoir augmenté dans une mesure indiquant un changement structurel dans le matériau de l'élément (15).

3. Procédé selon la revendication 1 ou la revendication 2, dans lequel des seuils comprenant des limites d'une plage de valeurs mesurées considérées comme indiquant un fonctionnement normal du matériau de l'élément (15) sont définis.

4. Procédé selon l'une quelconque des revendications 1 à 3, dans lequel un ou plusieurs processeurs (10) effectuent une surveillance de l'état de l'élément (15) de l'actionneur (14), moyennant quoi les valeurs mesurées sur une période de temps sont utilisées pour déterminer une planification d'entretien ou de réparation.

5. Procédé selon l'une quelconque des revendications 1 à 4, dans lequel le procédé comprend en outre de déterminer (45) si la vanne (12) est ouverte ou non avant d'effectuer la comparaison (48) des valeurs mesurées et des valeurs prédéterminées.

6. Procédé selon l'une quelconque des revendications 1 à 4, dans lequel le procédé comprend en outre de déterminer le degré d'ouverture de la vanne (12) avant d'effectuer la comparaison (48) des valeurs mesurées et des valeurs prédéterminées.

7. Système de surveillance de vanne, le système comprenant un actionneur (14) adapté pour maintenir un élément de fermeture de vanne (25) dans une position dans laquelle l'écoulement de fluide à travers la vanne (12) est permis ; un circuit de surveillance comprenant une source de signal (18), la source de signal (18) comprenant une source de courant (18) ou une source de tension, un capteur de signal (17) et un processeur (10), où le circuit de surveillance est adapté pour appliquer à un élément (15) de l'actionneur (14) un signal provenant de la source de signal (18) qui varie au moins en amplitude ou en fréquence ; où le circuit de surveillance est connecté à l'une ou l'autre extrémité de l'élément (15) de l'actionneur et adapté pour surveiller les signaux passant à travers l'élément (15) de l'actionneur (14) ; où les données provenant du capteur de signal (17) sont traitées dans le processeur (10) pour fournir une indication, si le signal surveillé se trouve en dehors d'une plage prédéterminée, ou dépasse un seuil ; **caractérisé en ce que** l'élément (15) de l'actionneur (14) comprend un ressort métallique (15) ; et où le système est adapté pour appliquer un procédé comprenant de balayer (43) un premier courant avec une amplitude variant dans le temps et un deuxième courant avec une fréquence variant dans le temps, de manière successive, afin de déterminer la fiabilité du ressort métallique (15).

8. Système selon la revendication 7, dans lequel le métal comprend de l'acier inoxydable ou un autre acier résistant à l'eau de mer.

9. Système selon la revendication 7 ou la revendication 8, dans lequel le courant appliqué par la source (18) est décalé selon au moins l'amplitude ou la fréquence dans le domaine temporel.

10. Système selon l'une quelconque des revendications 7 à 9, dans lequel la vanne (12) comprend une vanne sous-marine ou immergée, ou une vanne adaptée à des installations terrestres distantes.

11. Système selon l'une quelconque des revendications 7 à 10, dans lequel le seuil comprend une valeur minimale prédéterminée.

12. Vanne comprenant un corps de vanne, un élément de fermeture (25) et un système de surveillance de vanne selon l'une quelconque des revendications 7 à 11.
